# EUROPÄISCHE PATENTSCHRIFT

(11) **EP 1 161 292 B1**
(45) Veröffentlichungstag und Bekanntmachung des Hinweises auf die Patenterteilung: **02.05.2003**
(21) Anmeldenummer: 00910549.5
(22) Anmeldetag: 21.02.2000
(51) Int. Cl.: B01D 29/44, B01D 29/64, B01D 29/94, E03F 5/14

(54) **TRENNEINRICHTUNG FÜR DAS AUSSONDERN VON FESTSTOFFEN AUS EINEM FLÜSSIGKEITS- FESTSTOFF- GEMISCH**
SEPARATING DEVICE FOR REMOVING SOLIDS FROM A LIQUID-SOLID MIXTURE
DISPOSITIF DE SEPARATION PERMETTANT D'ELIMINER LES MATIERES SOLIDES CONTENUES DANS UN MELANGE LIQUIDE-MATIERES SOLIDES

(30) Priorität: 19.02.1999 DE 19907067
(43) Veröffentlichungstag der Anmeldung: 12.12.2001
(73) Patentinhaber: Rudolf Bischof GmbH, 85386 Eching (DE)
(72) Erfinder: MUHAREMOVIC, Abdulah, 85386 Eching (DE)
(74) Vertreter: Flügel, Otto, Dipl.-Ing.
(86) Internationale Anmeldenummer: DE0000496
(87) Internationale Veröffentlichungsnummer: WO00048705

(56) Entgegenhaltungen:
- EP-A- 0 630 674
- DE-A- 3 624 523
- US-A- 2 672 985
- US-A- 3 836 463
- US-A- 4 218 319
- US-A- 4 792 394
- US-A- 5 593 597

## Beschreibung

Die Erfindung betrifft ein Verfahren für das Aussondern von Feststoffen aus einem in einer bestimmten Strömungsrichtung zufließenden Flüssigkeits-Feststoff-Gemisch (Suspension), beispielsweise Abwasser, in einem Gerinne, Behälter oder dergleichen durch Auffangen der Feststoffe an einer das Flüssigkeits-Feststoff-Gemisch quer zu dessen Strömungsrichtung durchgreifenden Siebfläche und deren durch mechanischen Angriff zwangsweiser Abförderung von der Siebfläche zur Weiterbehandlung, sowie eine Trennvorrichtung zur Durchführung des Verfahrens.

Die hier angesprochenen technischen Einrichtungen, mit denen Feststoffe aus einem Flüssigkeits-Feststoff-Gemisch mit Hilfe eines Rechengerätes ausgesondert werden, das grundsätzlich ein - regelmäßig feststehendes - Sieb und einen diesem gegenüber derart bewegbaren Räumer umfasst, mit dem die von dem Sieb aus der Flüssigkeitsströmung abgefangenen Feststoffe von dem Sieb abgefördert werden, arbeiten regelmäßig so, dass die Feststoffe nach oben hin aus der in einem Gerinne, einem Kanal, einem Behälter oder dergleichen natürlich oder durch Pumpeinrichtungen unterstützt strömenden Flüssigkeit ausgehoben werden. Dadurch ergibt sich im Bereich oberhalb der strömenden Flüssigkeit ein entsprechender Platzbedarf für die Übergabe der Feststoffe in einen Container, eine Förderanlage oder eine Weiterbehandlungsanlage, z.B. zur Waschung dieser Feststoffe, des weiteren werden schwere und kleinvolumige Feststoffe im Bereich des Bodens des Gerinnes, Behälters etc. nur unvollständig aufgenommen und entfernt, wodurch die Gefahr eines Anwachsens solcher Bodenschichten und damit entsprechender mechanischer Belastung der Abfördereinrichtung gegeben ist. Im übrigen können nach oben abgeförderte Abfördereinrichtung gegeben ist. Im übrigen können nach oben abgeförderte Feststoffe im Abwurfbereich Verunreinigungen verursachen, es besteht darüber hinaus die Gefahr, das ein Teil der bereits ausgetragenen Feststoffe im Bereich hinter dem Sieb in den insoweit bereits gereinigten Flüssigkeitsstrom gelangen.

Der Erfindung liegt die Aufgabe zugrunde, ausgehend von der eingangs genannten Vorgehensweise hochaufragende Aufbauten zu vermeiden und insbesondere zuverlässig auch schwere und kleinvolumige Feststoffe im Bodenbereich des Gerinnes, Behälters oder dergleichen zu erfassen und abzufördem, ohne die Erfassung und Abförderung leichterer, insbesondere auch schwimmfähiger, Feststoffe zu vereiteln.

Zu Lösung der Aufgabe wird erfindungsgemäß derart vorgegangen, dass die Abförderung des Feststoffes von der Siebfläche zum Boden des Gerinnes, Behälters oder dergleichen hin durch zum Boden gerichteten mechanischen Angriff zwangsweise erfolgt, worauf im Zuge der Weiterverarbeitung der Feststoff zerkleinert und/oder aus dem Bodenbereich des Gerinnes, Behälters oder dergleichen nach außerhalb der Strömung abtransportiert wird. In bevorzugter Ausführung wird der zerkleinerungsfähige, einer Zerkleinerungseinrichtung entstammende, insoweit vorzerkleinerte Feststoff der Zerkleinerung wiederholt zugeführt und/oder der abzutransportierende Feststoff vor dem endgültigen Abtransport dem Bodenbereich wiederholt zugeführt.

Zur Durchführung des Verfahrens wird eine Trennvorrichtung vorgeschlagen, die für das Aussondem von Feststoffen aus einer in einer bestimmten Richtung zufließenden Strömung eines Flüssigkeits-Feststoff-Gemisches (Suspension), beispielsweise Abwasser, in einem Gerinne, Behälter oder dergleichen mit einem in das Flüssigkeits-Feststoff-Gemisch dieses quer zu dessen Strömungsrichtung durchgreifend eingesetzten Rechengerät versehen ist, das ein Sieb und einen Räumer umfasst, welch letzterer die von dem Sieb aus dem Gemisch aufgefangenen Feststoffe von diesem zwangsweise abstreift, die sich dadurch auszeichnet, dass der Räumer die von dem Sieb abgestreiften Feststoffe in einen Bodenbereich des Gerinnes, Behälters oder dergleichen hin gerichtet zwangsweise abfördemd ausgebildet ist und dass in diesem Bodenbereich eine Zerkleinerungsvorrichtung - Häcksel-, Schreddervorrichtung oder ähnliches - für den Weitertransport des entsprechend zerkleinerten, das Sieb passierenden Feststoffes mit dem Flüssigkeitsstrom zu einer Kläranlage oder dergleichen und/oder eine Transportvorrichtung für die Überführung von dem Räumer zum Bodenbereich hin abgestreiften Feststoffes nach außerhalb der Strömung vorgesehen ist.

Nach dieser Lehre wird die bislang gängige Vorstellung, aus einem Feststoff-Flüssigkeits-Gemisch mittels eines Siebes den Feststoff abzufangen und diesen ausgesiebten Feststoff nach oben hin aus der strömenden Flüssigkeit herauszuheben, grundsätzlich verlassen. Erfindungsgemäß wird der von dem Sieb abgefangene Feststoff nach unten zur Sohle des Gerinnes, Kanals, Behälters oder dergleichen gefördert und von dort entweder nach Zerkleinern durch das Sieb der abströmenden Flüssigkeit wieder zugegeben oder aber auf verschiedene Weise aus diesem Bodenbereich abtransportiert. Damit wird zunächst sichergestellt, dass auch schwere und kleinvolumige Feststoffe ausgesondert werden, die sich bei den bisherigen Abfördermethoden auf dem Boden des Gerinnes, Behälters oder der gleichen vor dem Sieb ansammeln und durch die heraushebende Abförderung nicht oder nicht genügend zuverlässig erfaßt werden. Erfindungsgemäß wird eine niedrige Bauhöhe des Rechengerätes erreicht; der Abtransport der abgefangenen Feststoffe kann - soweit diese nicht durch Zerkleinem, (Schreddem oder dergleichen) durch das Sieb in die abströmende Flüssigkeit eingespeist werden - ohne Gefahr von Verunreinigungen und ohne Geruchsbelästigung durch insoweit geschlossene Rohrleitungen abgeführt werden.

Der Bodenbereich für die Aufnahme des mittels des Räumers von dem Sieb abgestreiften Feststoff ist vorzugsweise durch einen insoweit abgrenzbaren Sammelraum gebildet, der oberhalb der Sohle bzw. Boden des Gerinnes bzw. des Behälters oder dergleichen und/oder zumindest teilweise durch eine Ausnehmung unterhalb der Sohlen- bzw. Bodenebene gebildet ist. Dieser Sammelraum ist an die Transportvorrichtung im Sinne einer Weitergabe des Feststoffes angeschlossen die - neben Rohrleitungen etc. für die Führung des Feststoffes - als Unterdruckquelle wie Saugpumpe, im Sinne einer Evakuierung beaufschlagter Unterdruckraum oder dergleichen oder als Überdruckquelle wie Druckpumpe, im Sinne eines Druckaufbaues beaufschlagter Überdruckraum oder dergleichen oder als mechanische Fördervorrichtung wie Förderschnecke, auch im aufeinanderfolgenden Abschnitten unterschiedlicher Förderrichtung, ausgebildet ist.

Vorzugsweise ist das Sieb des Rechengerätes von seinem unteren Randbereich aus gesehen aus der Vertikalen gegen die Strömungsrichtung geneigt ausgebildet, derart, dass der von dem Sieb aufgefangene Feststoff von dem Räumer erfaßt insoweit frei nach unten gelangen kann; auf das Rechengut wird insoweit keine Scherkraft ausgeübt, schwimmfähige Feststoffe werden zuverlässiger mit in Richtung Bodenbereich genommen, da die Strömung diesen schwimmfähigen Feststoff bei Anlauf an das Sieb zum Bodenbereich hin reflektiert. Unter diesem Neigungswinkel nach oben hin gesehen gegen die Strömungsrichtung geneigt, d.h. von der Strömungsrichtung nach oben gesehen jeweils unter einem spitzen Winkel verlaufend werden bevorzugt die Siebe solcher Rechengeräte angeordnet, bei denen die Räumer hinsichtlich ihrer Bewegungsbahn zwangsgeführt sind; dies sind insbesondere Siebe mit in vertikaler Ebene entsprechend der Bemessung der Sieböffnungen parallel beabstandeten Stäben, Patemosterrechen, Filterstufenrechen oder Lochbleche mit an diesen schiebend oder rotierend entlang geführten Räumern an sich bekannter Bauart.

Anstelle eines schiebend oder rotierend an dem Sieb entlang oder in dieses eingreifend geführten Räumers, der insoweit gegenständlich arbeitet, können auch Spritzdüsen diesen mechanischen Angriff an dem Sieb abgefangenen Feststoffen bewirken, die in vereinzelter Form bzw. als sogenannte Breitstrahldüsen ähnlich den Räumem gegenständlichen Angriffen an dem Sieb entlanggeführt werden. Dabei kann es sich auch in Ausbildung der Räumer als Düsen - hier kommen grundsätzlich gasförmige vorzugsweise aber flüssige Spritzmedien in Betracht - um solche handeln, die lochförmigen und insbesondere stabförmigen Sieben zugeordnet sind. In einfachster Form wird man durch die Düsen Reinigungswasser verspritzen, das von außerhalb zugeführt oder aber auch der insoweit gereinigten Flüssigkeit in Fließrichtung der Suspension hinter dem Sieb entnommen wird, letztere gegebenenfalls unter entsprechender Filterung.

Der Räumer in Ausbildung als Düsenspritzeinrichtung kann grundsätzlich in Mitströmrichtung wirksam angeordnet werden, vor allem wenn die Strahlrichtung der Düsen mit entsprechend steilem Winkel zum Boden hin gerichtet ist. Vorzugsweise werden die Düsen hinsichtlich ihrer Strahlrichtung jedoch in Gegenströmrichtung wirksam angeordnet. Die vornehmlich als Breitstrahldüsenanordnung ausgebildeten Spritzdüsen übergreifen dabei ähnlich wie die gegenständlich angreifenden Räumer grundsätzlich die gesamte Breite des Siebes.

Bei Einsatz von Siebwendel- oder Spiralrechenvorrichtungen als Rechengerät, bei denen eine oder mehrere nebeneinander angeordnete Siebmantelschneckeneinrichtungen Verwendung finden, die im unteren Bereich keine ortsfeste Lagerung aufweisen, muß wegen des erforderlichen Angriffes der Schnecke an dem Siebmantel eine leichte Neigung des oder der nebeneinander angeordneten Siebmäntel vom Boden aus gesehen in Strömungsrichtung vorgesehen werden, dieser Neigungswinkel kann jedoch wesentlich steiler in Richtung der Vertikalen gewählt werden, als dies bei den bisherigen Siebschneckenanlagen der Fall ist, die den Feststoff aus dem Gemisch nach oben herausheben.

In besonders bevorzugter Ausbildung kann das Rechengerät innerhalb des Gerinnes oder dergleichen hinsichtlich seiner Oberkante derart unterhalb der oberen Begrenzung des Gerinnes oder dergleichen bemessen ausgebildet sein, dass bei entsprechend überdurchschnittlichem Gemischanfall ein Notüberlauf stattfindet. Dies ist auch für den Fall des Versagens der Ermittlung des Flüssigkeitsstandes über den Boden des Gerinnes, Behälters oder dergleichen von Bedeutung. Der Betrieb der hier in Rede stehenden Anlagen läuft regelmäßig derart ab, dass die Durchlässigkeit des Siebes durch aufgefangenen Feststoff innerhalb einer Stillstandsperiode des Rechengerätes anwachsend abnimmt, so dass der Flüssigkeitsstand des Gemisches in Strömungsrichtung vor dem Sieb ansteigt. Bei Erreichen eines vorbestimmten Pegelwertes tritt der Räumer in Aktion und befreit das Sieb von dem aufgefangenen Feststoff. Der Feststoff gelangt in den Bodenbereich, der bevorzugt als Sammelraum - sich rinnenförmig über die Breite des Gerinnes, Behälters oder dergleichen erstreckend - ausgebildet ist und wird von dieser Ansammlung im Bodenbereich ausgehend weiterbehandelt. Insoweit ergibt sich eine periodische Betriebsweise.

In Richtung einer Beherrschung eines überdurchschnittlich hohen Zuführpegels der von Feststoffen zu befreienden Flüssigkeit - beispielsweise bei starkem Regenfall - kann zusätzlich zu einer Beschränkung der Oberkante des Rechengerätes innerhalb eines Gerinnes auf einen Bereich unterhalb der Gerinnebegrenzung in weiterhin bevorzugter Ausführung der Erfindung dafür gesorgt werden, dass der Strömungswiderstand (hydraulischer Widerstand) des Rechengerätes bzw. dessen als Siebes oder als solches wirkender Teil eines Rechengerätes im Bereich höherer Flüssigkeitsstände dadurch geringer wird, dass die Öffnungen des Siebes vom Boden aus gesehen nach oben zunehmend großräumiger und damit hinsichtlich der Flüssigkeit durchlässiger ausgebildet sind. Dies ist grundsätzlich bei allen Sieben, auch bei Lochsieben, möglich, wird bevorzugt aber bei der stabförmigen Ausbildung von Sieben - in vertikalen Ebenen voneinander beabstandet angeordneten Siebstäben - dadurch verwirklicht, dass deren Abstand vom Boden des Gerinnes nach oben hin gesehen größer werdend ausgebildet ist, insbesondere in Form von Stufen durch nach oben hin gesehen kürzerer Ausbildung eines Teils der Siebstäbe, von denen jeder zwischen zwei länger ausgebildeten Siebstäben endend ausgebildet ist. Während demnach in bodennahen Bereich des Gerinnes oder dergleichen eine enge Siebgestaltung vorliegt, die neben ihrer guten Siebwirkung eine bei niedrigem Flüssigkeitsstand ausreichende Durchlässigkeit gewährleistet, wird bei höherem Flüssigkeitsstand und vor allem bei Maximalständen der Strömungswiderstand soweit verringert, dass ein Überlauf des Gerinnes oder dergleichen vermieden wird. Dabei ist zu berücksichtigen, dass die baulichen Gegebenheiten eines Gerinnes oder dergleichen nicht beliebig wählbar sind: Bei einer zu breiten Ausführung würde es bei Niedrigwasserzulauf und damit geringer Strömungsgeschwindigkeit zu Ablagerungen von sinkfähigen Feststoffen im Gerinne vor dem Rechengerät kommen. Des weiteren sind Platz- und Kostengründe zu berücksichtigen. Diese sich nach oben hin erhöhende Durchlassfähigkeit des Siebes kann natürlich mit dessen Begrenzung auf einen Wert unterhalb der Oberkante des Gerinnes oder dergleichen kombiniert werden. Die nach oben hin gestaffelte Durchlässigkeit des Siebes zeigt einen besonderen Vorteil der hier im Vordergrund stehenden Abförderung der Feststoffe zum Boden hin; bei einer bisher bekannten Förderung in Gegenrichtung würden feinere Feststoffe im Zuge der aufwärtsgerichteten Abförderung durch die sich erweiternden Sieböffnungen in den Bereich in Strömungsrichtung hinter dem Sieb gelangen und damit insoweit das erreichte Siebergebnis zunichte machen.

Die Weiterbehandlung des von dem Sieb nach unten abgestreiften Feststoffes kann auf verschiedenerlei Weisen erfolgen, die kombiniert werden können. Soweit zerkleinerungsfähiger Feststoff anfällt, kann dieser mittels einer Zerkleinerungsvorrichtung (Häcksler, Schredder) zerkleinert werden, und zwar soweit, dass die zerkleinerten Feststoffbestandteile durch die Sieböffnungen mit der Flüssigkeit weiterbefördert werden und insoweit einer Weiterbehandlung unterliegen, wie sie für die von - groben - Feststoffen gereinigte Flüssigkeit des Gemisches vorgesehen ist. In besonders bevorzugter Ausführung der Erfindung werden die einer für diesen Zweck vorgesehenen Zerkleinerungsvorrichtung entstammenden Feststoffe wiederholt durch Rücktransport zum Eingangsbereich des Zerkleinerers dem Zerkleinerungsprozeß unterzogen, um möglichst viel des zerkleinerungsfähigen Feststoffes auf diese Weise durch das Sieb mit der abgeführten Flüssigkeit weiterzuverarbeiten und dem Abtransport aus der Flüssigkeitsströmung heraus zu entziehen. Es verbleiben dann insoweit nur die nicht zerkteinerungsfähigen Feststoffe für den Abtransport aus dem Bodenbereich bzw. Sammelraum nach außerhalb der Strömung, insbesondere in einen Zulieferbereich oberhalb der oberen Berandung des Gerinnes, Behälters oder dergleichen.

Eine weitere bevorzugte Weiterbehandlungsvariante für den in den Sammelraum im Bodenbereich des Gerinnes, Behälters oder dergleichen besteht darin, dass dieser, insbesondere nicht zerkleinerungsfähige, Feststoff vor seinem endgültigen Abtransport aus der Gemischströmung in einer insoweit vorgeschalteten Betriebsphase im Sinne des Abtransportes abgeführt, so dann aber zunächst in den Bodenbereich zurück geführt wird - gegebenenfalls mehrmals -, wodurch ein intensives Waschen dieses angesammelten Feststoffes vor dem endgültigen Abtransport stattfindet, um den vorzugsweise einer Deponie oder Müllverbrennung zuzuführenden Feststoff möglichst von organischen Anhaftungen zu befreien.

Soweit die Zerkleinerung dafür zugänglicher Feststoffe mit einer wiederholten Waschung vornehmlich nicht zerkleinerungsfähiger Feststoffe kombiniert wird, können beide Vorgänge zeitlich gleichzeitig oder aber auch zeitlich aufeinanderfolgend durchgeführt werden. Zur Intensivierung des Waschvorganges kann in dem Sammelraum in an sich bekannter Weise eine Turbulenz durch ein Wirbelrad, durch Zufuhr von Wasser- und/oder Luft oder dergleichen durch Düsen erzeugt werden.

Schließlich ist es auch möglich, die Abförderung von aus der Flüssigkeit abgesiebten Feststoffen in einen unteren Randbereich des Siebes vorzunehmen, der nicht die Gesamte untere Randbreite umfasst, wie dies bei den bisherigen Beispielen der Fall ist. Eine solche Konzentrierung des von dem Sieb abgeförderten Feststoffes, die grundsätzlich irgendwo im Randbereich, vorzugsweise aber im Mittelbereich des unteren Randgebietes gelegen ist, hat den Vorteil einer örtlich konkret definierten Abführung und damit Weiterleitung des ausgesiebten Feststoffes nach außerhalb des Gerinnes oder dergleichen. Insbesondere kann die randseitige Abführung derart erfolgen, dass die abgesiebten und von der Siebfläche abgeförderten Feststoffe in die Einwurföffnung einer Förderschnecke gelangen, die bei Abförderung des Feststoffes durch die Flüssigkeit im Gerinne oder dergleichen als Siebsförderschnecke ausgebildet sein kann. Die vorstehend geschilderte Einrichtung eignet sich auch besonders für eine konkretere Behandlung der Flüssigkeit bei Niedrig- und Hochflüssigkeitsstand. Man kann nämlich dabei die Siebförderschnecke bodenseitig in einem entsprechend schmal gehaltenen Bodenkanalbereich des Gerinnes enden lassen, in den auch bei sehr niedrigem Flüssigkeitsstand noch eine ein Absetzen von Feststoffen behindernde Fließgeschwindigkeit herrscht, während für den höheren Wasserstand ein sich über diesen Bodenkanal hinaus erweiternder Gerinnebereich für die Aufnahme der bei höherem Flüssigkeitsstand zusätzlichen Flüssigkeit ergibt, in dessen Querschnitt das vorerwähnte Sieb mit dem auf den Schneckeneinwurf konkretisierten und ausgerichteten Feststoffdurchlass eingebaut ist, so dass bei höherem Flüssigkeitsstand von dem Sieb aufgefangener Feststoff der Förderschnecke zugeführt und von dieser ebenso wie die Feststoffe im schmalen Bodenkanal abtransportiert wird.

Bevorzugte Ausführungen der Erfindung sind in den Unteransprüchen 2 und 4 bis 12 erfaßt.

Die Erfindung wird anhand der in der Zeichnung wiedergegebenen Ausführungsbeispiele nachstehend näher erläutert. Es zeigen:
- Figur 1: ein Rechengerät innerhalb eines Gerinnes in teilweise aufgebrochener perspektivischer Darstellung mit einem zum Boden des Gerinnes bündigen Sammelraum, wobei das Sieb als Stabrechen ausgebildet ist und der Räumer mit in Strömungsrichtung abragenden Harkenzinken versehen ist und die Abführung der abgestreiften Feststoffe aus dem Sammelraum durch Unterdruck mittels einer Tauchmotorpumpe erfolgt;
- Figur 2: ein Rechengerät innerhalb eines Gerinnes in teilweise aufgebrochener Darstellung mit einem als rinnenförmige Aussparung vertieften, in dem Rinnenboden ausgearbeiteten Sammelraum, wobei das Sieb als Stabrechen ausgebildet ist und der Räumer mit in Strömungsrichtung abragenden Harkenzinken versehen ist und die Abführung der abgestreiften Feststoffe aus dem Sammelraum durch Unterdruck mittels einer Tauchmotorpumpe erfolgt;
- Figur 3: ein Rechengerät innerhalb eines Gerinnes in teilweise aufgebrochener perspektivischer Darstellung mit einem zum Boden des Gerinnes bündigen Sammelraum, wobei das Sieb als Stabrechen ausgebildet ist und der Räumer mit in Gegenströmungsrichtung abragenden Harkenzinken versehen ist und die Abführung der abgestreiften Feststoffe aus dem Sammelraum durch Unterdruck mittels einer Tauchmotorpumpe erfolgt;
- Figur 4: ein Rechengerät innerhalb eines Gerinnes in teilweise aufgebrochener perspektivischer Darstellung mit einem als rinnenförmige Aussparung vertieften, in dem Rinnenboden ausgearbeiteten Sammelraum, wobei das Sieb als Stabrechen ausgebildet ist und der Räumer mit in Gegenstromrichtung abragenden Harkenzinken versehen ist und die Abführung der abgestreiften Feststoffe aus dem Sammelraum durch Unterdruck mittels einer Tauchmotorpumpe erfolgt;
- Figur 5: ein Rechengerät und eine Sammelraumausbildung ähnlich Figur 2, wobei anstelle der Tauchmotorpumpe eine außerhalb der Strömung oberhalb der Gerinneoberebene aufgestellte Pumpe vorgesehen ist;
- Figur 6: ein Rechengerät und eine Sammelraumausbildung ähnlich Figur 2, wobei als Abtransporteinrichtung bzw. Druckerzeugungseinrichtung eine Druckpumpe vorgesehen ist;
- Figur 7: ein Rechengerät und eine Sammelraumausbildung ähnlich Figur 2, bei der als Abtransportvorrichtung eine aus zwei Abschnitten bestehende Förderschneckenausbildung vorgesehen ist.
- Figur 8: ein Rechengerät und eine Sammelraumausbildung ähnlich Figur 3 zur Verdeutlichung einer derart niedrigeren Rechenausbildung unterhalb der Oberkante des Gerinnes, so dass ein Notüberlauf ermöglicht ist;
- Figur 9: ein Rechengerät und eine Sammelraumausbildung ähnlich Figur 2 zur Verdeutlichung einer derart niedrigeren Rechenausbildung unterhalb der Oberkante des Gerinnes, so dass ein Notüberlauf ermöglicht ist;
- Figur 10: ein Rechengerät in Ausbildung als Lochblechrechen in Anwendung auf eine Sammelraumausbildung gemäß Figur 2;
- Figur 11: ein Rechengerät in Ausbildung als Paternosterrechen in Anwendung auf eine Sammelraumausbildung gemäß Figur 2;
- Figur 12: ein Rechengerät in Ausbildung als Filterstufenrechen in Anwendung auf eine Sammelraumausbildung gemäß Figur 2 in einer einen Notüberlauf ermöglichenden Höhenausbildung;
- Figur 13: ein Rechengerät mit einer Sammelraumausbildung gemäß Figur 3 mit einem Drei-Wege-Schieber in der Abtransportleitung zur wahlweisen Rückführung des abzutransportierenden Feststoffes zur wiederholten Waschung zurück in den Sammelraum;
- Figur 14: ein Rechengerät in Anwendung auf eine Sammelraumausbildung gemäß Figur 2 mit einer Zerkleinerungsvorrichtung innerhalb des Sammelraumes mit einer Rückspülung von insoweit vorzerkleinertem Feststoff am Ausgang des Zerkleinerers zur Rückführung an dessen Eingang;
- Figur 15: ein Rechengerät ähnlich Figur 14 mit einer in einem Sammelraum derart angeordneten Zerkleinerungsvorrichtung, dass unter dieser ein Geröllfang gebildet ist;
- Figur 16: ein Rechengerät in Ausbildung als Siebwendel oder Siebschnecke in Mehrfachanordnung in Anwendung an einem teilweise rinnenförmig unterhalb des Gerinnebodens ragenden Sammelraum und einem DreiWege-Schieber in der Abtransportleitung für die gegebenenfalls wiederholte Rückführung des abzutransportierenden Feststoffes in den Sammelraum.
- Figur 17: ein Rechengerät ähnlich beispielsweise demgemäss Figuren 3 und 4, bei dem der Räumer anstelle von Harkenzinken mit Spritzdüsen versehen ist, im vorliegenden Beispiel als Breitstrahldüse ausgebildet;
- Figur 18: ein Rechengerät mit einem als Stabrechen ausgebildeten Sieb mit vom Boden aus gesehen nach oben sich erweiternden Sieböffnungen;

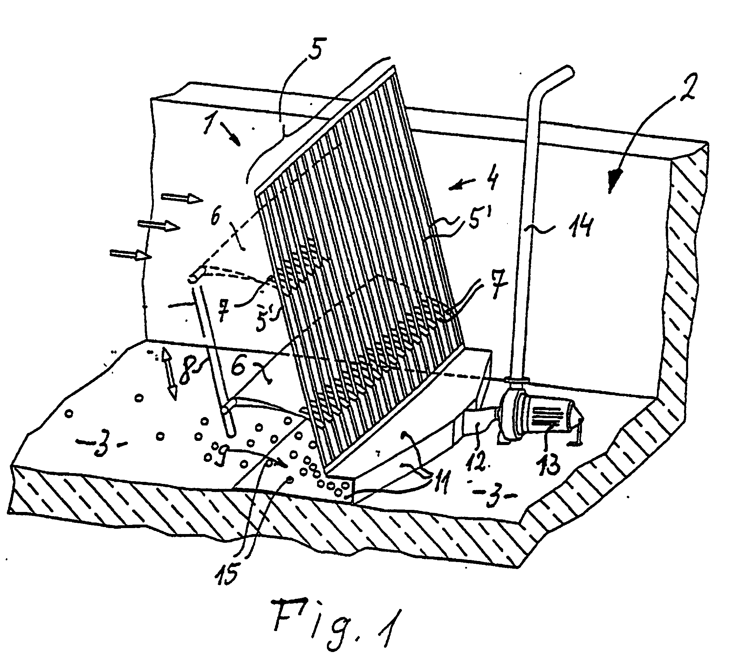

In Figur 1 ist ein Gerinne 2 durch seitliche und vordere Abbrechung derart verdeutlicht, dass man ohne die den Betrachter ansonsten zugewandte Schenkelwandung des im Querschnitt U-förmigen Gerinnes Einblick in das Innere des Gerinnes an einer Stelle hat, an der die Aussonderung von Feststoffen aus einem das Gerinne in Pfeilrichtung - siehe Zeichnung - durchströmenden Flüssigkeits-Gemisches hat, das in Strömungsrichtung vor einem Rechengerät 1 Feststoffe einer volumenmäßig größeren Konstitution enthält als danach. Die strömungsmäßig nach dem Rechengerät in dem Gerinne vorhandene Flüssigkeit soll nur noch entsprechend kleinvolumige, das Sieb des Rechengerätes passierende Feststoffe enthalten, die im Zuge der Weiterbehandlung - Klärwerk etc. - verarbeitbar sind. Das Rechengerät entfernt somit zunächst alle Feststoffpartikel, die ihrer Größe nach die Sieböffnungen des Siebes des Rechengerätes nicht durchtreten können. Für die folgenden Betrachtungen gilt darüber hinaus, dass das Gerinne 2 in aufgebrochener Darstellung als Beispiel für eine Reihe weiterer Einrichtungen steht, die ein Feststoff-Flüssigkeits-Gemisch (Suspension) der in Rede stehenden Art in einer bestimmten Strömungsrichtung führen. Es kann sich dabei neben einem Gerinne, wie es in der Abwasserbehandlung bekannt ist, in ähnlicher Weise um einen Behälter handeln, in den zu klärende Flüssigkeit zum Zwecke der Aussonderung von Feststoffen unter Einhaltung einer bestimmten Strömungsrichtung eingegeben wird, oder dergleichen funktionell ähnlicher Einrichtungen mehr.

Das Rechengerät 1 ist auf den Boden 3 des insgesamt mit 2 bezeichneten Gerinnes aufgesetzt, und zwar im Beispiel nach Figur 1 hinsichtlich der unteren Randabmessung des Siebes 4, hier bestehend aus einem Stabrechen 5, dessen Stäbe 5' in vertikaler Ebene gleichmäßig parallel beabstandet und damit zwischen jeweils benachbarten Stäben die Sieböffnungen bildend angeordnet sind, derart, dass die Stäbe nach unten im Oberkantenbereich eines Sammelraumgehäuses 11 münden, das einen Sammelraum 9 unterhalb des Stabrechens 5 im Bodenbereich des Gerinnes 2, und zwar mit diesem Bodenbereich bündig abschließend, definiert. Der Sammelraum 9 wird somit ohne Beeinträchtigung des mit durchgehendem Querschnitt gebildeten Gerinnes geschaffen, so dass sich diese Bauweise des Rechengerätes auch im Sinne einer Nachrüstung in jedes bestehende Gerinne einsetzen läßt.

Dem Stabrechen 5 ist ein insgesamt mit 6 bezeichneter Räumer zugeordnet, der hinsichtlich seiner parallel zu den Stabrechenstäben 5' verlaufenden Führung 8 derart bewegbar ist, dass er mit seinen Harkenzinken 7 in die Sieböffnungen zwischen den parallel verlaufenden Stabrechenstäben 5' eingreift, wenn der Räumer 6 von oben nach unten bewegt wird, während die Harkenzinken 7 im Zuge der Rückbewegung des Räumers 6 von unten nach oben sich außerhalb der Sieböffnungen zwischen den Stäben 5' befinden. Auf diese Weise wird sich im Siebbereich des Stabrechens 5 ansammelnder Feststoff ausschließlich in Richtung des Bodens des Gerinnes 2 und damit in den Bereich des Sammelraums 9 gefördert. Der durch das Sammelgehäuse 11 umschlossene Sammelraum 9 ist durch eine stromab angeordnete Anschlußleitung 12 an den Saugeingang einer Tauchmotorpumpe 13 angeschlossen, deren pumpseitiger Ausgang in eine Abtransportleitung 14 mündet, die - wie gezeigt - in diesem Falle den in dem Sammelraum 9 nach Abstreifen des Stabrechens 5 durch den Räumer 6 geförderten Feststoff 15 in einen Bereich oberhalb der oberen Kantenbegrenzung des Gerinnes 2 leitet, sei es in einen Container oder eine andere Transporteinrichtung bzw. eine weitere Behandlungseinrichtung, beispielsweise Entwässerungseinrichtung, generell mit dem Ziel, diesen Feststoff zu deponieren. Im regulären Betrieb setzten somit die in dem Feststoff-Flüssigkeits-Gemisch in Strömungsrichtung - Pfeile in Längsrichtung des Gerinnes in den Figuren - die Sieböffnungen zwischen den Stäben 5' im Laufe der Zeit derart zu, dass der Flüssigkeitspegel in Strömungsrichtung vor dem Rechengerät 1 ansteigt, bis eine entsprechende Pegelüberwachungseinrichtung die Betätigung des Räumers 6 auslöst. In Folge wird der durch den Räumer 6 in den Sammelraum 9 abgestreifte Feststoff 15 innerhalb des Sammelraumgehäuses 11 durch Betrieb der Tauchmotorpumpe 13, die über Anschlußleitung 12 über eine entsprechende Öffnung des Gehäuses 11 mit den Sammelraum 9 verbunden ist, durch entsprechenden Unterdruck angesaugt und in die Abtransportleitung 14 gespeist und von dort aus einer bekannten Weiterbehandlung zugeführt.

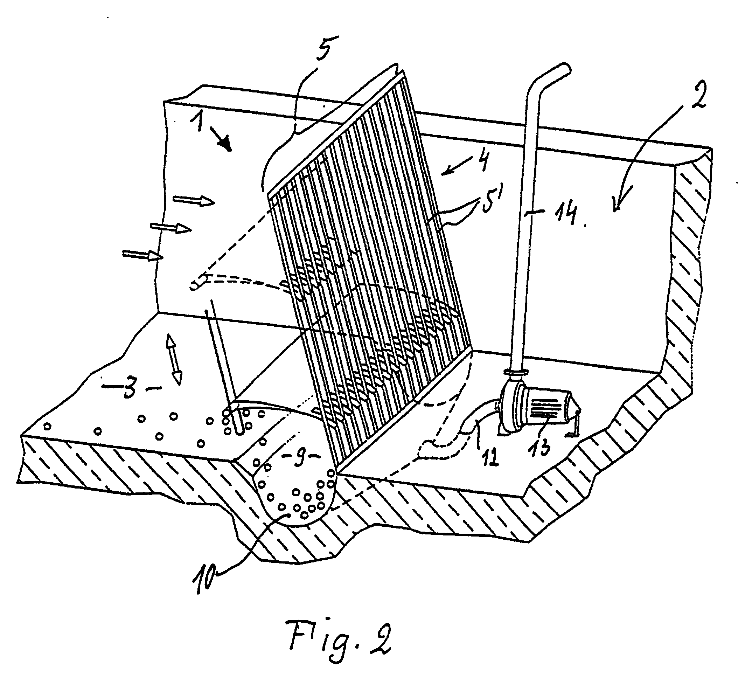

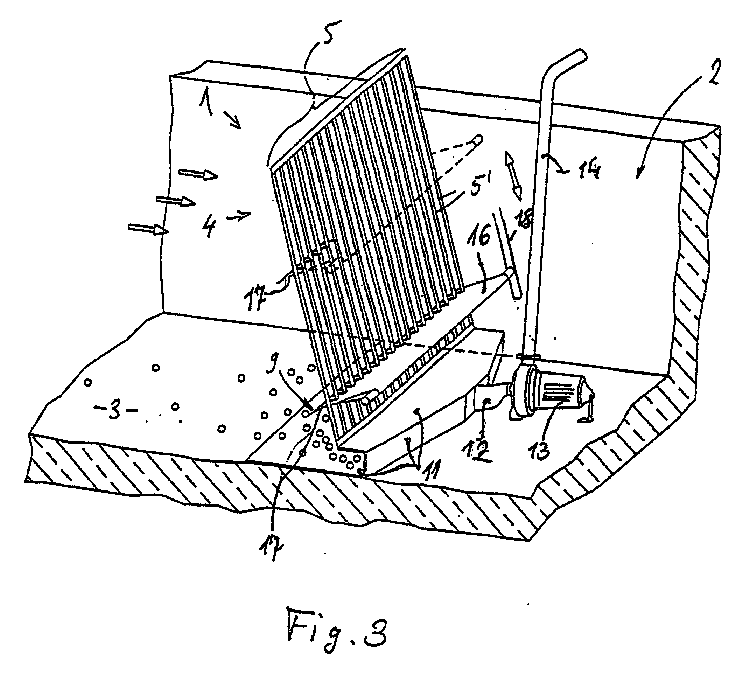

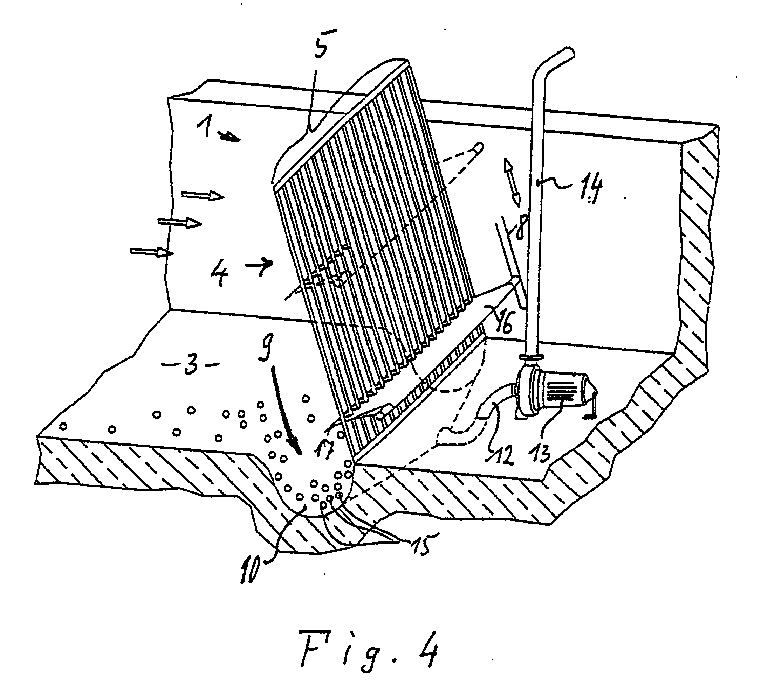

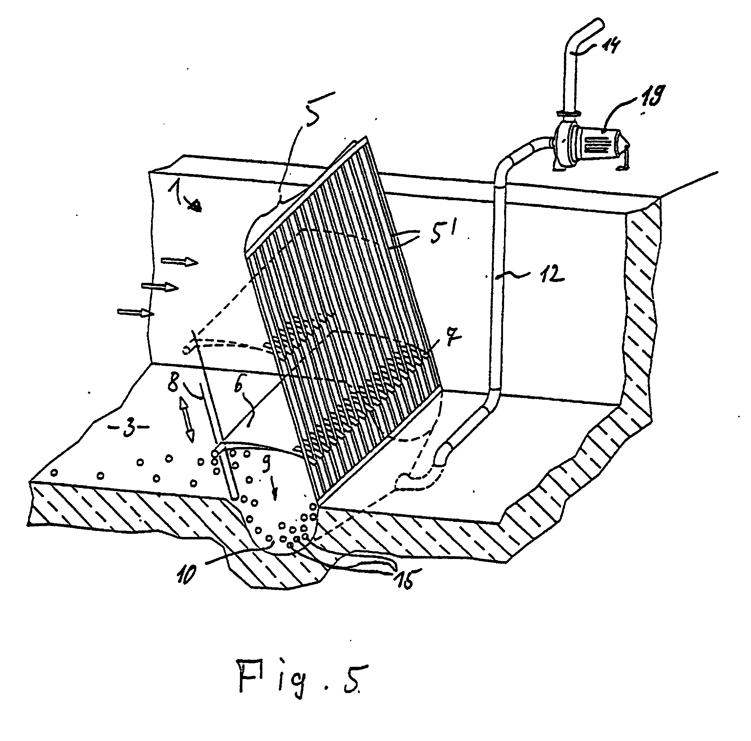

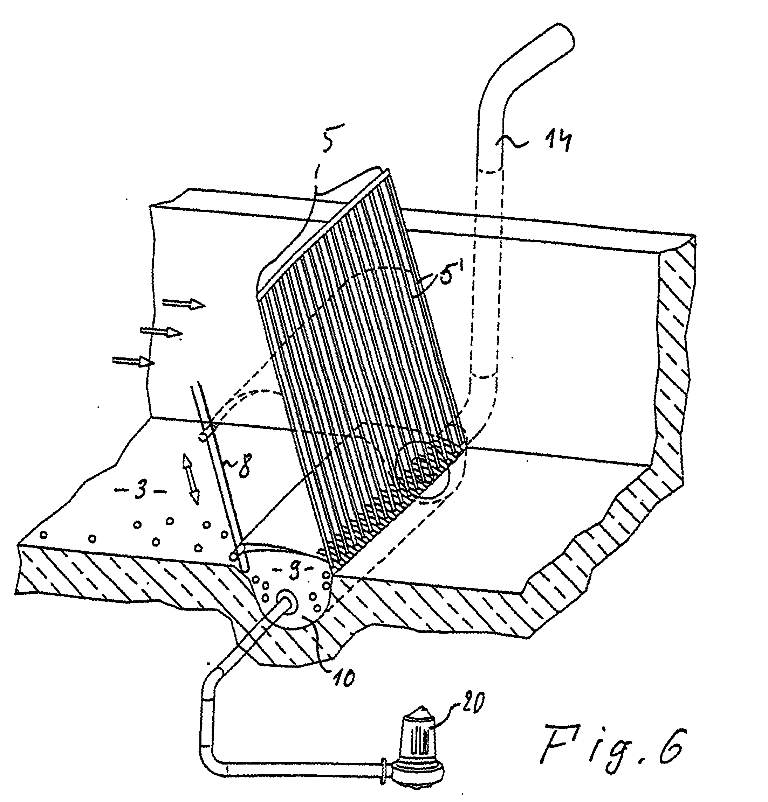

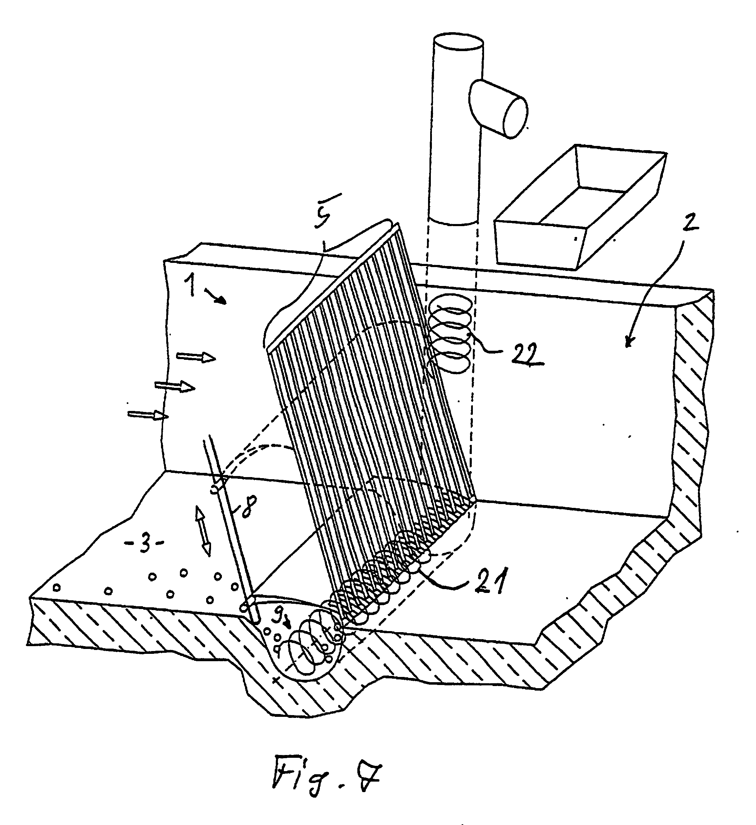

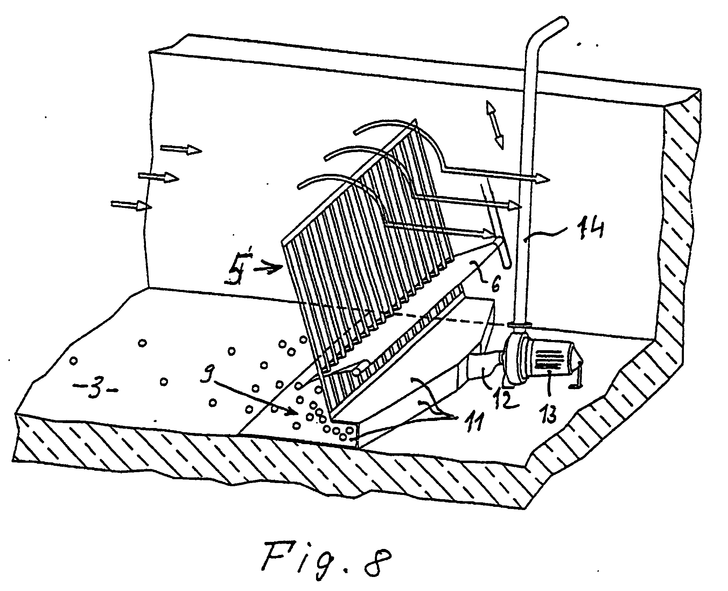

Das Ausführungsbeispiel gemäß Figur 2 zeigt ein Rechengerät 1 mit einem Stabrechen 5, dessen Stäbe 5' bis zum Boden 3 des Gerinnes 2 geführt sind. In Strömungsrichtung gesehen vor der bodenseitigen Enden der Stäbe 5' ist in den Gerinneboden 3 eine nach unten gerichtete, quer zur Strömungsrichtung verlaufende Sammelraumrinne 10 in den Gerinneboden 3 eingelassen, wie dies die Figur 2 zeigt. Das Rechengerät 1 entspricht demjenigen des vorgeschilderten Ausführungsbeispieles gemäß Figur 1, d.h. auch hier ist ein Stabrechen 5 mit in vertikaler Ebene parallel beabstandeten Stäben 5' vorgesehen, zwischen die die Harkenzinken 7 eines Räumers 6 in Strömungsrichtung gesehen eingreifen. Die Feststoffe 15 werden mittels einer Tauchmotorpumpe 13 abtransportiert, wie dies im Zusammenhang mit Figur 1 beschrieben wurde.

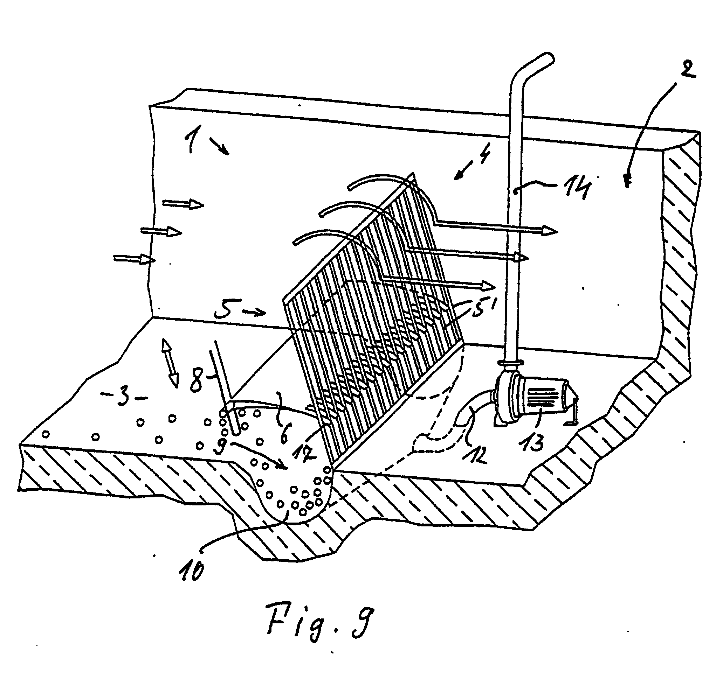

Die Ausführung gemäß Figur 3 zeigt wiederum einen Stabrechen 5 mit aufeinanderfolgend gleichmäßig beabstandeten Siebstäben 5' in Aufeinanderfolge quer zur Strömung des Flüssigkeits-Feststoff-Gemisches, d.h. in diesem Falle quer zum Querschnitt des Gerinnes 2 angeordnet, so dass die gesamte Strömung des Feststoff-Flüssigkeits-Gemisches auf die Erfassung von Feststoffen größer als die Sieböffnungen abgetastet wird. Wie auch in den beiden vorerwähnten Figuren ist dabei der Stabrechen vom Gerinneboden 3 aus gesehen aus der Vertikalen in Gegenströmungsrichtung geneigt angeordnet, so dass aus der Strömungsrichtung gesehen das stabrechenförmige Sieb mit dem Boden 3 des Gerinnes 2 einen Winkel kleiner 90° einschließt. Wie im Zusammenhang mit Figur 1 bereits geschildert ist der Sammelraum 9 durch ein Sammelraumgehäuse 11 derart gebildet, dass der Gerinneboden 3 eben bleiben kann, also keiner Bearbeitung, insbesondere Vertiefung, bedarf. Im Gegensatz zu dem Ausführungsbeispiel gemäß Figur 1 ist der Räumer 16 stromab des Stabrechens 5 angeordnet, derart, dass die Harkenzinken 17 entgegen der Strömungsrichtung abragend mit den Sieböffnungen zwischen den Stäben 5' kommunizieren. Auch hier ist die Bewegung des Räumers 16 derart, dass die Harkenzinken 17 nur bei Abwärtsbewegung zwischen die Stäbe 5' eingreifen in vergleichbarer Weise durch die Führung 18 gesteuert, wie im Zusammenhang mit Figur 1 geschildert.

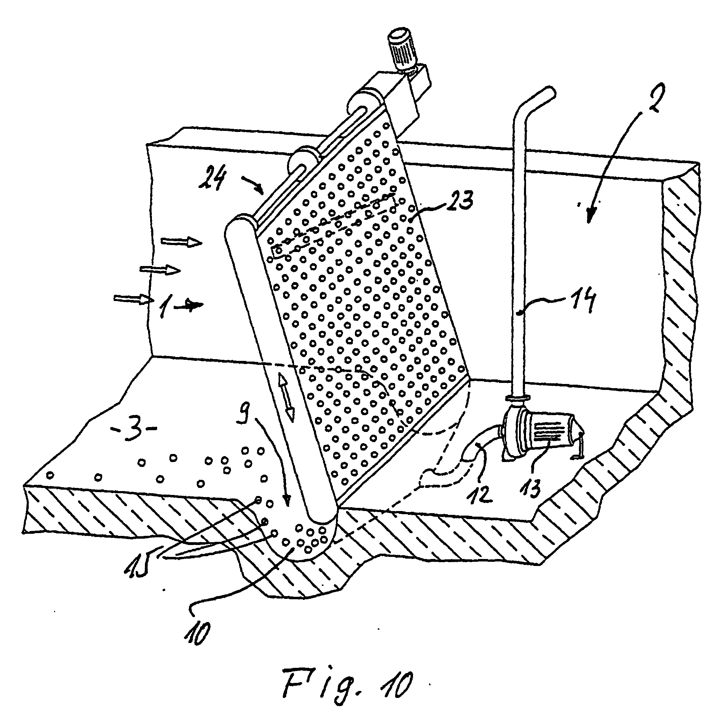

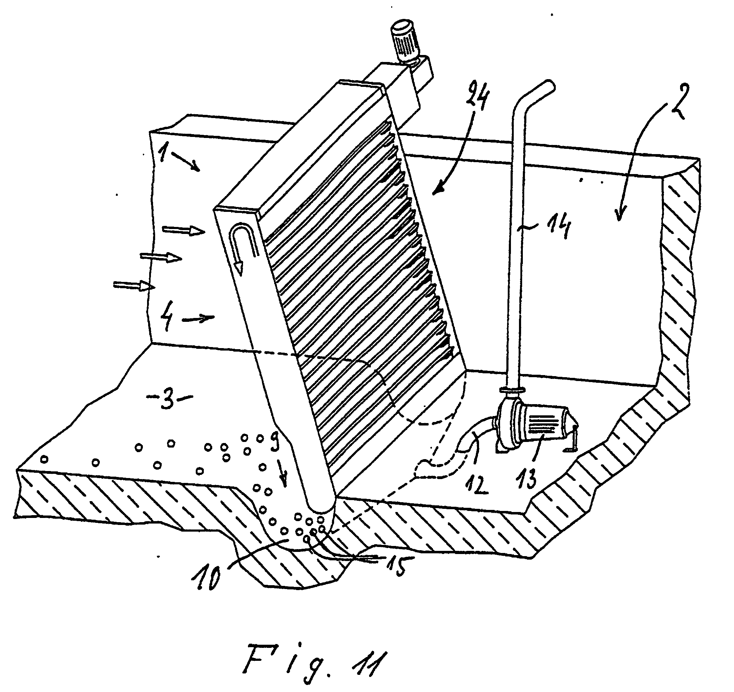

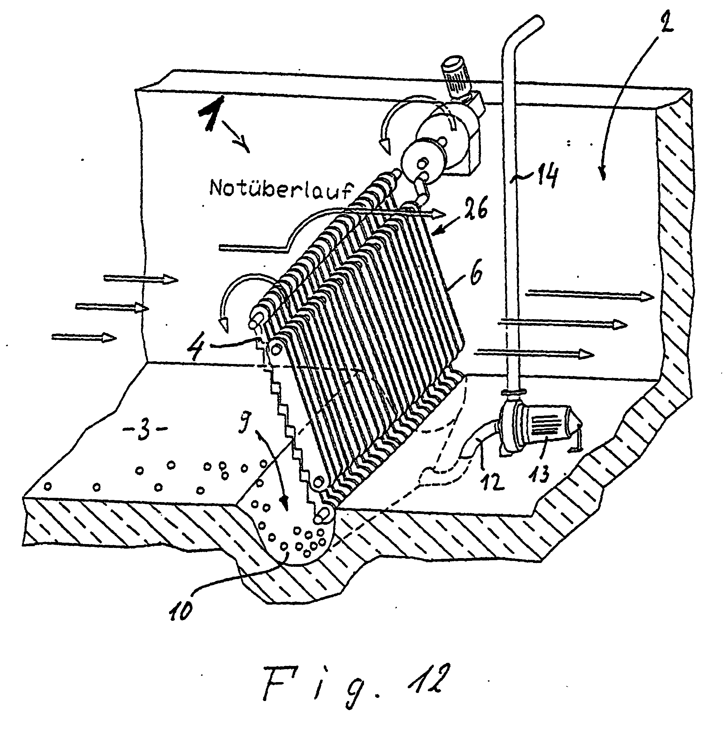

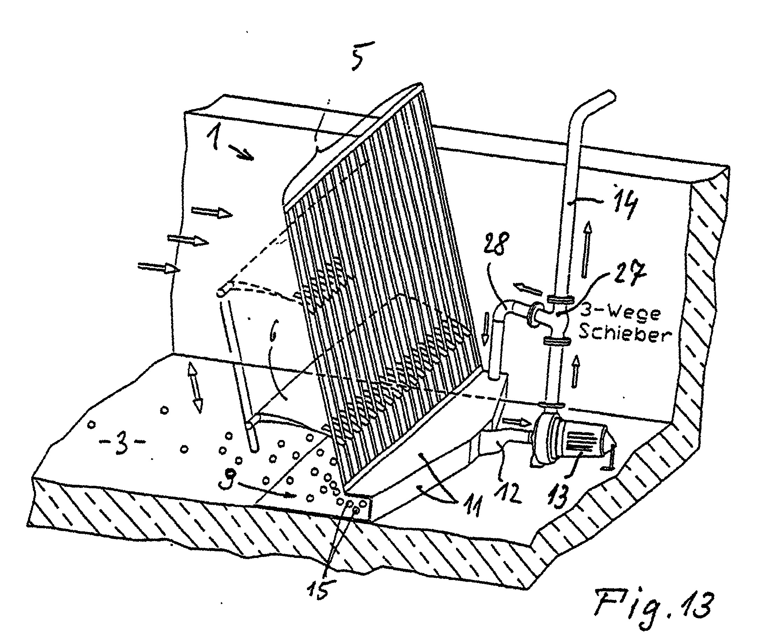

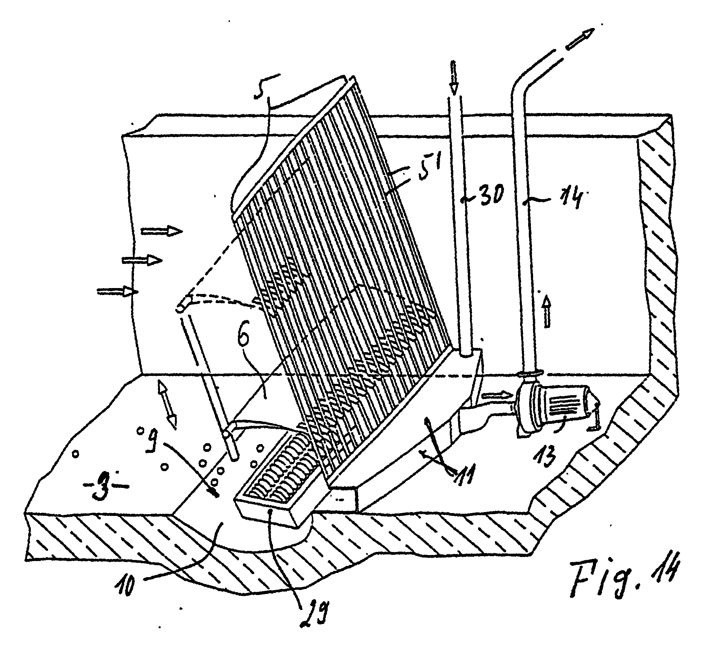

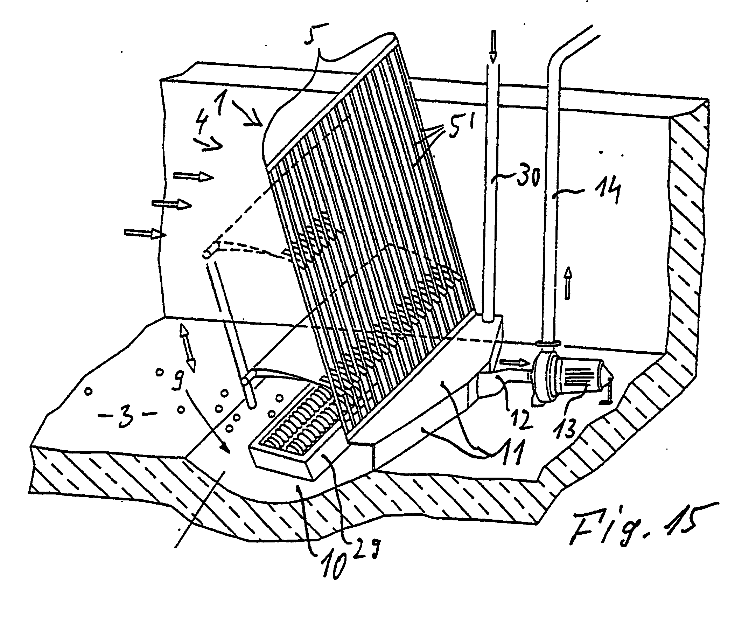

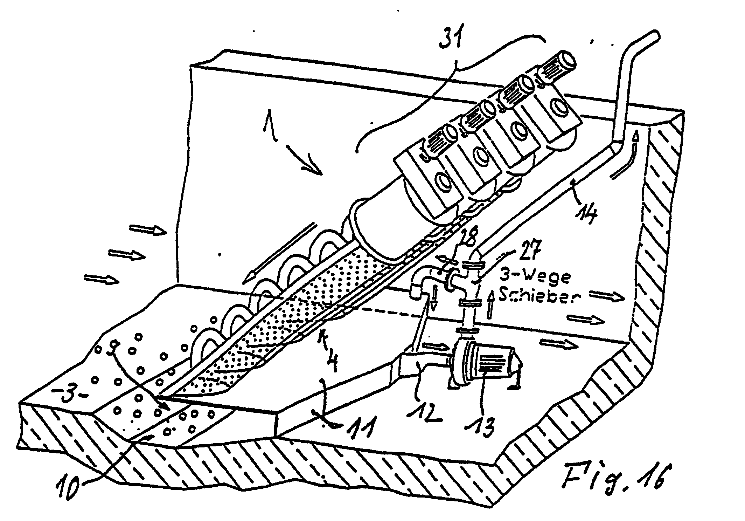

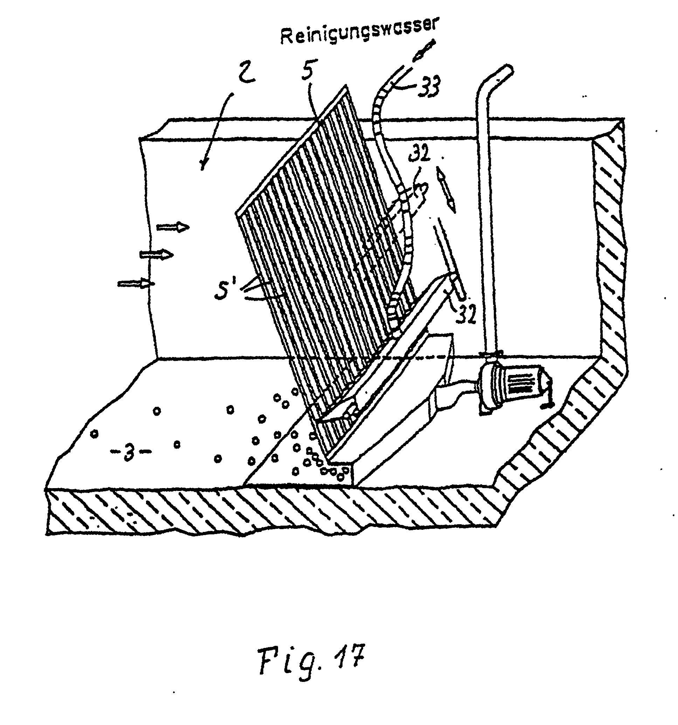

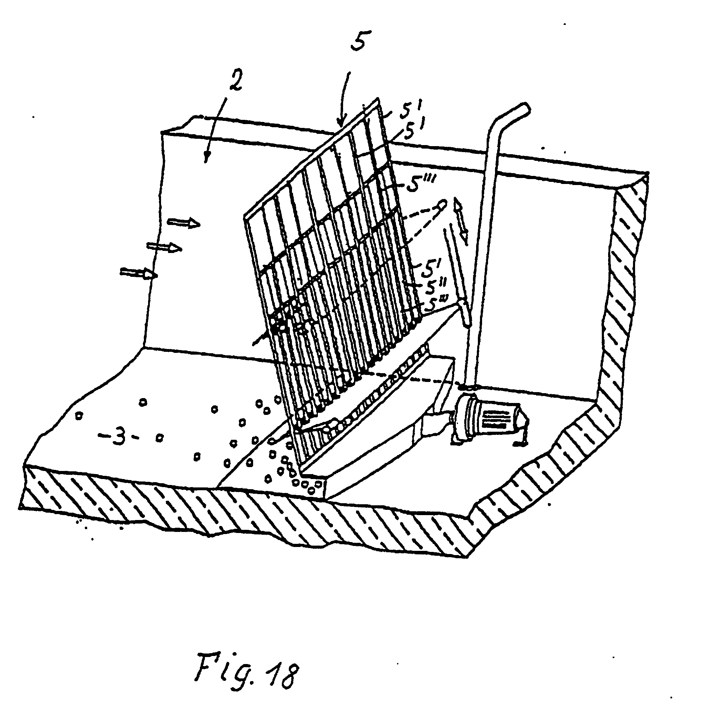

Figur 4 zeigt ein Rechengerät 1 mit einem Stabrechen 5 und einem Räumer 16 im Zusammenhang mit einem Sammelraum 9, der durch eine in den Rinnenboden 3 eingelassene Sammelraumrinne 10 gebildet ist: In Abwandlung zu Figur 2 wird die Möglichkeit einer "Gegenstromräumung" mittels eines in Strömungsrichtung hinter dem Stabrechen 5 angeordneten Räumers gezeigt, dessen Harkenzinken gegen die Strömungsrichtung abragen, wie dies auch bei dem Beispiel gemäß Figur 3 der Fall ist.

Figur 5 zeigt hinsichtlich des Rechengerätes einen Stabrechen 5 und einen Räumer 6 wie im Zusammenhang mit Figur 2 beschrieben, ebenso die dortige Ausbildung des Sammelraumes 9 durch eine Sammelraumrinne 10. Anstelle einer unter Wasser angeordneten Tauchmotorpumpe 19 bzw. Unterdruckquelle, beispielsweise "Vakuumfaß" ist hier der Sammelraum 9 an eine Saugquelle in Form einer oberhalb der Gerinneoberfläche angeordneten Motorpumpe 19 angeschlossen, dies nur zur Demonstration der Variabilität der Ausführungsmöglichkeiten.

Figur 6 lehnt sich hinsichtlich des Rechengerätes 1 und der Gestaltung des Sammelraumes 9 - Rinne 10 - an das Ausführungsbeispiel gemäß Figur 2 an. In Abwandlung der Abtransportvorrichtung für den in der Rinne 10 des Sammelraumes 9 angesammelten Feststoff wird hier anstelle einer Saugeinrichtung - Tauchmotorpumpe - eine Druckmotorpumpe 20 eingesetzt, die den Sammelraum 9 nach Abstreifen der Feststoffe von dem Sieb 5 stoßartig unter Druck setzt, so dass der Feststoff im Sammelraum 9 durch eine räumlich entgegengesetzt angeordnete Abtransportleitung 14 ausgestoßen wird.

Die im Zusammenhang mit den Figuren 1 bis 5 und direkt vorstehend Figur 6 angesprochenen druckbestimmten Abtransportvorrichtungen können anstelle von unmittelbar angeschlossenen Pumpen auch mit Unterdruck- bzw. Überdruckbehältem arbeiten, die im vorliegenden periodischen Betrieb vorbereitend druckbeaufschlagt bzw. in Richtung eines Vakuums beaufschlagt werden. Die Kraftausübung auf die angesammelten Feststoffe, insbesondere Gestein etc., erfolgt dann schlagartig.

Figur 7 zeigt schematisch die Abführung von Feststoff aus dem - hier zumindest teilweise durch eine Sammelraumrinne 10 - gebildeten Sammelraum 9 mit Hilfe von Förderschnecken, die sich im vorliegenden Beispiel aus zwei Abschnitten - 21 horizontal fördernd im Sammelraum und 22 senkrecht dazu abfördemd aus dem Gerinne nach oben - zusammensetzen, wobei diese Abförderung auch in gegenüber der Vertikalen geneigten Richtung erfolgen kann.

Das Ausführungsbeispiel gemäß Figur 8 soll fußend auf demjenigen gemäß Figur 3 verdeutlichen, dass der Stabrechen 5 und die Führung des zugeordneten Räumers 6 niedriger als die obere Berandungsebene des Gerinnes ausgebildet sein können, so dass im Falle einer Verstopfung ohne rechtzeitige Abförderung des Feststoffes von dem Sieb oder einem übergroßen Anfall an Feststoff-Flüssigkeits-Gemisch ein Notüberlauf möglich ist - Pfeildarstellung in Figur 8 - ohne dass der Pegel des Gemisches die obere Berandung des Gerinnes übersteigt.

Figur 9 soll in ähnlicher Weise die Notüberlaufeigenschaft anhand einer verkürzten Rechenausführung auf der Basis der Anordnung gemäß Figur 2 zeigen.

Figur 10 zeigt ein Rechengerät in Ausführung als Kombination eines Lochbleches 23 als Sieb und einer Bürsteneinrichtung 24, rotierend entlang einer parallel zum Lochblech 23 geführten Bahn derart, dass die Bürste bei Abwärtsbewegung an der Anströmfläche des Lochbleches 23 angreift und bei Aufwärtsbewegung von dieser entfernt geführt ist. Die übrige Ausstattung dieses Ausführungsbeispieles entspricht etwa demjenigen gemäß Figur 2.

Figur 11 zeigt ein Rechengerät in Ausführung als Patemosterrechen 24 bei welchem die Förderrichtung derart gewählt ist, dass in der aktiven Förderfläche der Strömung des Gemisches zugewandt die Förderwirkung zum Boden 3 des Gerinnes hin erfolgt. Die übrigen Verhältnisse entsprechen denjenigen des Ausführungsbeispieles nach Figur 2.

Figur 12 zeigt die Ausbildung des Rechengerätes als Filterstufenrechen 26 dabei entspricht ein feststehender Teil etwa einem Stabrechen 4, während der Räumer 6 motorisch angetrieben mit entsprechenden Zinken die Zwischenräume zwischen den Stäben des Rechens 4 rhythmisch durchgreift - Exzenterantrieb wie dargestellt, so dass Feststoff aufgrund der nach unten gerichtet steilflankig ausgebildeten Stirnseiten in Strömungsrichtung beider Elemente mit jedem Hub - Umdrehung des Exzenters nach unten gefördert wird. Solche Filterstufenrechen sind an sich bekannt. Die übrigen Ausbildungen dieses Beispiels orientieren sich nach demjenigen der Figur 2.

Figur 13 orientiert sich im Grundaufbau an dem Ausführungsbeispiel gemäß Figur 1 mit der Besonderheit, dass in der Abtransportleitung 14 anschließend an den Ausgangsbereich der Tauchmotorpumpe 13 ein Drei-Wege-Schieber 27 eingeschaltet ist, der dem wahlweisen Feststofftransport insoweit endgültig über die Abtransportleitung 14 oder wahlweise über eine Rückführleitung 28 erlaubt, dergestalt, dass mit Hilfe der Pumpe 13 aus dem Sammelraum abgesogener Feststoff nach entsprechender Einstellung des Drei-Wege-Schiebers 27 über eine Rückführleitung 28 wiederholt in den Sammelraum 9 zurückgeführt wird. Durch dieses Umwälzen des Feststoffes erreicht man eine entsprechend intensivierte Wäsche, d.h. Befreien des eigentlichen Feststoffes von organischen Anhaftungen, was durch Turbulenzerzeugung innerhalb des Sammelraumes 9 beispielsweise durch Wirbelräder oder über Düsen eingespritztes Wasser, Luft oder dergleichen noch verstärkt werden kann. Solche Verwirbelungszonen zum Zwecke intensiverer Wäsche der Feststoffe sind an sich bekannt.

Figur 14 zeigt eine Zerkleinerungsvorrichtung 29, die im Bereich des Sammelraumes 9 angeordnet ist und die Aufgabe hat, von dem Räumer 6 durch Abstreifen von dem Sieb 5 zum Boden hin geförderten Feststoff mit dem Ziel zu zerkleinern, die durch Zerkleinerung gewonnenen Restfeststoffe durch die Sieböffnungen förderbar der abströmenden Gerinneflüssigkeit beizumengen. Feststoffe dieser entsprechend kleinen Größenordnung lassen sich mit der Flüssigkeit stromabwärts des Siebes des Rechengerätes je nach Ausrüstung der Nachfolgebehandlungsgeräte verträglich behandeln. Damit verbleiben lediglich die nicht oder nicht genügend zerkleinerbaren Feststoffe als solche, die im Bereich der Aussiebung aus der Gemischflüssigkeit entfernt werden müssen.

Die Zerkleinerungsvorrichtung 29 kann in einem Durchgang die zerkleinerbaren, anfallenden Feststoffe möglicherweise nicht soweit zerkleinern, dass sie bereits das Sieb passieren können. Aus diesem Grunde ist nach dem Beispiel gemäß Figur 14 der Sammelraum 9 über eine Rückspülleitung 30 durch Zuführung von Spülflüssigkeit oder Luft derart beaufschlagbar, dass am Ausgang des Zerkleinerers auftretender Feststoff für einen erneuten Zerkleinerungsvorgang an den Eingang des Zerkleinerers zurückgespült werden kann. Dies kann sich solange wiederholen, bis sämtlicher zerkleinerbarer Feststoff auf eine die Sieböffnungen passierbare Größenordnung gebracht ist. Nicht oder nicht ausreichend zerkleinerbarer Feststoff wird wie in den vorstehenden Beispielen erörtert abtransportiert, auch hier wieder nach den Grundsätzen des Beispieles gemäß Figur 2.

Figur 15 zeigt eine Variante gegenüber dem Ausführungsbeispiel gemäß Figur 14 insoweit als die Zerkleinerungsvorrichtung 29 nicht den rinnenförmigen Sammelraum 10 unterhalb des Bodens 3 des Gerinnes 2 stromab abschließt - Figur 14, bei welcher Anordnung sämtlicher nicht zerkleinerbarer Feststoff über die Zerkleinerungsvorrichtung 29 läuft und diese damit entsprechend beansprucht - sondern so angeordnet ist, dass der Raum der Sammelrinne 10 die Zerkleinerungsvorrichtung 29 untergreift. Dadurch kann sich im Raum unterhalb der Zerkleinerungsvorrichtung nicht der Zerkleinerung zugängliches oder nicht gewollt dieser Zerkleinerung zuzuführendes Material, insbesondere Steine etc. in einem sogenannten Geröllfang sammeln und aus diesem dann durch die Über- oder Unterdruckeinrichtungen oder mechanischen Fördereinrichtungen wie Schneckenwendel entfernt werden.

Figur 16 zeigt ein Rechengerät in Form mehrerer in Richtung der Breite des Gerinnes nebeneinander angeordneter Siebwendel oder Siebschnecken 31, die im Gegensatz zu den vorstehend geschilderten Ausführungsbeispielen nicht vom Boden 3 des Gerinnes her gesehen aus der Vertikalen gegen die Strömungsrichtung geneigt, sondern mit der Strömungsrichtung aus der Vertikalen geneigt angeordnet sind, weil die dem Abtrieb abgewandten unteren Enden der Wendel bzw. Schnecken nicht ortsfest geführt sind. Diese Wendel bedürfen daher unter der Schwerkraft eine Lagestabilisierung in Zuordnung zu ihrem jeweiligen Siebmantel. Im übrigen ist die Abführung der abgeförderten bzw. abgestreiften Feststoffe in vergleichbarer Weise getroffen, wie im Zusammenhang mit dem Ausführungsbeispiel gemäß Figur 13 dargelegt. Figur 16 zeigt - im übrigen auch in Anlehnung an Figur 15 - eine Sammelraumausbildung, die zum einen Teil durch eine das Gerinne quer durchgreifende Sammelraumrinne 10 und zum anderen durch ein oberhalb des Gerinnebodens 3 sich erstreckenden Sammelraumgehäuse umgriffen ist.

Figur 17 zeigt eine aufgebrochene Teildarstellung eines Gerinnes mit einem Sieb 5 aus Siebstäben 5', dem ein Räumer in Gestalt einer Breitstrahldüse 32 zugeordnet ist, die ähnlich einem Räumer mit Zinken parallel zur Siebfläche des Siebes 5 verschiebbar geführt ist. Sowohl das Sieb als auch die Breitstrahldüse 32 erstrecken sich dabei über die gesamte lichte Weite des Gerinnequerschnittes. Die Breitstrahldüse 32 bedarf keiner mechanisch unterschiedlichen Wege für die Auf- und Abbewegung, eine gezielte Arbeitsweise nur zur Loslösung und Abführung von an dem Sieb abgesetzten Feststoffen in Richtung Boden ist dadurch erreichbar, dass man die Breitstrahldüse nur im Zuge der Abwärtsbewegung Spritzflüssigkeit versprühen lässt. Diese Spritzflüssigkeit - Reinigungswasser - kann von außen z.B. durch eine Schlauchleitung 33 oder dergleichen zugeführt werden, es ist jedoch auch möglich, diese Flüssigkeit aus dem insoweit gereinigten Bereich hinter dem Sieb 5 der Flüssigkeit zu entnehmen. Im übrigen lehnt sich diese Darstellung an die Gegebenheiten gemäß Figur 3 und die in diesem Zusammenhang gegebenen Erläuterungen an.

Figur 18 zeigt eine insoweit für alle vorbeschriebenen Ausführungen, also ganz allgemein anwendbare Ausgestaltung des Siebes der Recheneinrichtung dergestalt, dass vom Boden aus nach oben gesehen die Durchtrittsöffnungen des Siebes für die von Feststoffen zu befreiende Flüssigkeit größer werdend ausgebildet sind. Dies ist bei einem Sieb mit Lochöffnungen genauso möglich wie bei einem mit länglichen Öffnungen versehenen Sieb nach Maßgabe beispielsweise und vor allem in vertikalen Ebenen verlaufenden, jeweils untereinander beabstandeten Siebstäben, die insoweit auch durch entsprechende Bereiche der Rechen nach den Figuren 11 und 12 gebildet sein können. In Figur 18 ist ein Sieb unter zur Hilfenahme von Siebstäben gebildet, die vom Boden aus gesehen unterschiedlich lang nach oben hin abragend ausgebildet sind. Ein unterer Bereich des Siebes weist eine Anzahl von in Richtung der Breite des Gerinnes eng beabstandeten Stäben 5', 5" und 5'" auf, die demnach ein bei niedrigerem Flüssigkeitsstand verhältnismäßig engmaschiges Sieb - Sieb mit (kleinen) schmalen Durchtrittsöffnungen - bilden. Nach oben hin gesehen in Richtung eines höheren Wasserstandes endet jeder zweite Stab 5", so dass sich zwischen den Stäben 5' und 5"' breitere Abstände und damit ein geringerer Strömungswiderstand ergeben. In einer noch weiter nach oben verlegten Zone enden auch die Stäbe 5"', so dass eine hohe hydraulische Durchlässigkeit gegeben ist. Diese Art der Siebgestaltung kann anstelle der in der Höhe begrenzten Ausgestaltung der Siebe - Figuren 8, 9 und 12 oder aber auch im Rahmen einer solchen höhenbegrenzten Ausbildung vorgesehen sein. Im übrigen ist die vorgeschilderte Schaffung von Abständen durch Weglassen von Stababschnitten nicht zwingend, es können auch seitlich versetzte Stabanordnungen vorgesehen werden und im übrigen auch unterschiedlich dick ausgebildete Stabbereiche.

## Patentansprüche

1. Verfahren für das Aussondern von Feststoffen aus einem in einer bestimmten Strömungsrichtung zufließenden Flüssigkeits-Feststoff-Gemisch (Suspension), beispielsweise Abwasser, in einem Gerinne, Behälter oder dergleichen durch Auffangen der Feststoffe an einer das Flüssigkeits-Feststoff-Gemisch quer zu dessen Strömungsrichtung durchgreifenden Siebfläche und deren durch mechanischen Angriff zwangsweiser Abförderung von der Siebfläche zur Weiterbehandlung,
**dadurch gekennzeichnet,**
**dass** die Abförderung der Feststoffe von der Siebfläche zum Boden des Gerinnes, Behälters oder dergleichen hin durch zum Boden gerichteten mechanischen Angriff zwangsweise erfolgt, worauf im Zuge der Weiterverarbeitung die Feststoffe aus dem Bodenbereich des Gerinnes, Behälters oder dergleichen nach außerhalb der Strömung abtransportiert oder in dem Bodenbereich zerkleinert oder soweit nicht genügend zerkleinert aus dem Bodenbereich nach außerhalb der Strömung abtransportiert werden.

2. Verfahren nach Anspruch 1,
**dadurch gekennzeichnet,**
**dass** die Feststoffe im Zuge des Abtransportes dem Bodenbereich wiederholt zugeführt werden.

3. Trenneinrichtung für das Aussondern von Feststoffen aus einer in einer bestimmten Richtung zufließenden Strömung eines Flüssigkeits-Feststoff-Gemisches (Suspension), beispielsweise Abwasser, in einem Gerinne (2), Behälter oder dergleichen mit einem in das Flüssigkeits-Feststoff-Gemisch dieses quer zu dessen Strömungsrichtung durchgreifend eingesetzten Rechengerät (1), das ein Sieb (4) und einen Räumer (6) umfasst, welch letzterer die von dem Sieb (4) aus dem Gemisch aufgefangenen Feststoffe von diesem abstreift, zur Durchführung des Verfahrens nach Anspruch 1 oder 2,
**dadurch gekennzeichnet,**
**dass** der Räumer (6) die von dem Sieb (4) abgestreiften Feststoffe in den Bodenbereich des Gerinnes (2), Behälters oder dergleichen hin gerichtet abfördernd ausgebildet ist und dass eine Transportvorrichtung für die Überführung des von dem Räumer (6) zum Bodenbereich abgestreiften Feststoffes nach außerhalb der Strömung vorgesehen ist oder in dem Bodenbereich eine Zerkleinerungsvorrichtung (29) - Häcksel-, Schreddervorrichtung oder ähnliches - für den Weitertransport des entsprechend zerkleinerten, das Sieb (4) passierenden Feststoffes mit dem Flüssigkeitsstrom zu einer Kläranlage oder dergleichen vorgesehen ist oder sowohl eine Zerkleinerungsvorrichtung (29) als auch eine Transportvorrichtung für die Überführung der nicht genügend zerkleinerten Feststoffe nach außerhalb der Strömung vorgesehen sind.

4. Trennvorrichtung nach Anspruch 3,
**dadurch gekennzeichnet,**
**dass** der Bodenbereich für die Aufnahme des mittels des Räumers (6) von dem Sieb (4) abgestreiften Feststoffes durch einen Sammelraum (9) gebildet ist, der oberhalb der Sohle (3) des Gerinnes (2) bzw. Bodens des Behälters oder dergleichen oder zumindest teilweise durch eine Ausnehmung (10) unterhalb der Sohle (3) bzw. des Bodens gebildet ist, welcher Sammelraum (9) an die Transportvorrichtung (13; 19; 20) in Ausbildung als Unterdruckquelle wie Saugpumpe (13), im Sinne einer Evakuierung beaufschlagter Unterdruckraum oder dergleichen oder Druckpumpe, im Sinne eines Druckaufbaues beaufschlagter Überdruckraum oder dergleichen oder mechanische Fördervorrichtung wie Förderschnecke oder dergleichen angeschlossen ist.

5. Trennvorrichtung nach Anspruch 3 oder 4,
**dadurch gekennzeichnet,**
**dass** das Sieb (4) von seinem unteren Randbereich aus gesehen in oder aus der Vertikalen gegen die Strömungsrichtung geneigt ausgebildet ist.

6. Trenneinrichtung nach Anspruch 5,
**dadurch gekennzeichnet,**
**dass** das Sieb (5) in etwa vertikaler Ebene, nach Maßgabe der Siebwirkung beabstandet parallel verlaufend angeordnete Siebstäbe (5') aufweist, zwischen denen die Sieböffnungen als von oben nach unten zum Boden (3) des Gerinnes (2), Behälters oder dergleichen verlaufende Schlitze ausgebildet sind, in die Harkenzinken (7) des Räumers (6) im Zuge der Abstreifbewegung von oben nach unten eingreifen, während die entgegengesetzte Bewegung der Harkenzinken (7) außerhalb des Eingriffes an dem Sieb (5) erfolgt, wobei die Harkenzinken (7) in Strömungsrichtung abragend oder entgegengesetzt in die Sieböffnungen eingreifend ausgebildet sind.

7. Trenneinrichtung nach einem der Ansprüche 3 bis 5,
**dadurch gekennzeichnet,**
**dass** das Sieb als Lochblech (23) ausgebildet ist, an dem der Räumer (24) schiebend oder rotierend von oben nach unten entlanggeführt ist, während die entgegengesetzte Bewegung außerhalb des Angriffs an dem Sieb erfolgt.

8. Trenneinrichtung nach einem der Ansprüche 3 bis 5,
**dadurch gekennzeichnet,**
**dass** das Rechengerät als Paternosterrechen (25) oder Filterstufenrechen (26) ausgebildet Ist.

9. Trenneinrichtung nach Anspruch 3 oder 4,
**dadurch gekennzeichnet,**
**dass** das Rechengerät als eine oder mehrere nebeneinander angeordneten Siebwendel - oder Siebspiralrechenvorrichtungen (31) ausgebildet ist oder sind.

10. Trenneinrichtung nach einem der Ansprüche 3 bis 5,
**dadurch gekennzeichnet,**
**dass** der Räumer durch auf die an dem Sieb (5) aufgefangenen Feststoffe gerichtete Spritzdüsen gebildet ist, die in Höhenrichtung des Siebes verschiebbar sind.

11. Trenneinrichtung nach einem der Ansprüche Anspruch 3 bis 10,
**dadurch gekennzeichnet,**
**dass** die Öffnungen des Siebes (5) vom Boden aus gesehen nach oben zunehmend größer (weiter) ausgebildet sind, insbesondere bei Ausbildung mit Siebstäben (5', 5", 5''') derart, dass deren Beabstandung - vorzugsweise gestuft - nach oben hin größer werdend ausgebildet ist.

## Claims

1. Process for separating solids from a liquid/solid mixture (suspension), such as waste water or sewage, flowing in a specified direction of flow, in a gutter, container or the like, by trapping the solids on a screening surface which passes through the liquid/solid mixture at right angles to the direction of flow thereof and forcibly conveying them, by mechanical action, away from the screening surface for further treatment, **characterised in that** the solids are forcibly conveyed away from the screening surface towards the bottom of the gutter, container or the like by mechanical action directed towards the bottom, after which, in the course of the further processing, the solids are transported out of the bottom part of the gutter, container or the like towards the outside of the flow or are broken up in the bottom part or, if insufficiently broken up, are transported out of the bottom part towards the outside of the flow.

2. Process according to claim 1, **characterised in that** the solids are repeatedly conveyed to the bottom part in the course of being transported away.

3. Separator for separating solids from a stream of a liquid/solid mixture (suspension), such as waste water or sewage, flowing in a specified direction, in a gutter (2), container or the like, with a raking device (1) introduced into the liquid/solid mixture at right angles to the direction of flow thereof, which comprises a screen (4) and a clearer (6), this latter scraping off, from the screen (4), the solids from the mixture trapped by said screen, for carrying out the process according to claim 1 or 2, **characterised in that** the clearer (6) is constructed to convey the solids scraped off the screen (4) into the bottom part of the gutter (2), container or the like, and **in that** a transporting device is provided for transferring the solids scraped off downwards by the clearer (6) towards the outside of the flow, or a comminuting device (29) (grinder, shredder or the like) is provided in the bottom part for further conveying the suitably broken-up solids capable of passing through the screen (4) with the stream of liquid to a sewage treatment plant or the like, or both a comminuting device (29) and a transporting device for conveying the insufficiently broken up solids towards the outside of the flow are provided.

4. Separator according to claim 3, **characterised in that** the bottom part for accommodating the solids scraped off the screen (4) by the clearer (6) is formed by a collecting chamber (9) which is formed above the base (3) of the gutter (2) or base of the container or the like or is at least partly formed by a recess (10) underneath the base (3) or bottom, this collecting chamber (9) being connected to the transporting device (13; 19; 20) constructed as a vacuum source such as a suction pump (13), a vacuum chamber or the like acted upon to evacuate it or a compression pump, an overpressure chamber or the like acted upon to produce high pressure, or a mechanical conveyor such as a screw conveyor or the like.

5. Separator according to claim 3 or 4, **characterised in that** the screen (4) is constructed to be inclined relative to the direction of flow, in a vertical position or out of the vertical, viewed from its lower edge region.

6. Separator according to claim 5, **characterised in that** the screen (5) has screen bars (5') arranged parallel to one another and spaced apart in a substantially vertical plane, to produce the screening effect, between which the screen openings are formed as slots running from top to bottom to the base (3) of the gutter (2), container or the like, into which the prongs (7) of the clearer (6) engage in the course of the scraping movement from top to bottom, while the opposite movement of the prongs (7) takes place out of engagement with the screen (5), the prongs (7) being constructed to project downwards in the direction of flow or, in the opposite direction, to engage in the screen openings.

7. Separator according to one of claims 3 to 5, **characterised in that** the screen is constructed as a perforated sheet (23) over which the clearer (24) is passed from top to bottom in a sliding or rotary movement, while the opposite movement takes place out of engagement with the screen.

8. Separator according to one of claims 3 to 5, **characterised in that** the raking device is constructed as a paternoster rake (25) or graduated filtering rake (26).

9. Separator according to claim 3 or 4, **characterised in that** the raking device is constructed as one or more coiled or helical raking devices (31) arranged side by side.

10. Separator according to one of claims 3 to 5, **characterised in that** the clearer is formed by spray jets directed towards the solids trapped on the screen (5), these jets being movable in the vertical direction of the screen.

11. Separator according to one of claims 3 to 10, **characterised in that** the openings in the screen (5) become increasingly larger (wider) in the upward direction, viewed from the base, particularly when constructed with screen bars (5', 5'', 5'") such that the - preferably graduated - spacing between them increases in size in the upward direction.

## Revendications

1. Procédé pour séparer des matières solides d'un mélange liquide solides (suspension) s'écoulant dans une certaine direction, notamment des eaux usées dans une goulotte, un réservoir ou analogue, en retenant les matières solides au niveau d'une surface formant tamis traversant le mélange liquide solides transversalement à sa direction d'écoulement et par attaque mécanique pour l'évacuation forcée de la surface de tamis pour une poursuite de traitement,
**caractérisé en ce que**
l'évacuation des matières solides de la surface de tamis se fait de force vers le fond de la goulotte du réservoir ou analogue, par une attaque mécanique dirigée vers le fond,
et au cours de la suite du traitement, les matières solides sont évacuées de la zone de fond de la goulotte, réservoir ou analogue, vers l'extérieur de l'écoulement ou sont réduites dans la zone du fond, ou dans la mesure où elles ne sont pas suffisamment réduites, elles sont évacuées de la zone du fond, vers l'extérieur de l'écoulement.

2. Procédé selon la revendication 1,
**caractérisé en ce que**
les matières solides sont fournies de manière répétée à la zone de fond au cours de leur évacuation.

3. Installation de séparation pour séparer des matières solides d'un mélange liquide solides (suspension) s'écoulant dans une certaine direction comme par exemple des eaux usées dans une goulotte (2), un réservoir ou un moyen analogue, avec un appareil de raclage placé transversalement à la direction de l'écoulement dans le mélange solide pour le traverser, et qui comprend un tamis (4) et un racleur (6), ce dernier raclant les matières solides séparées par le tamis (4) du mélange pour la mise en oeuvre du procédé selon la revendication 1 ou 2,
**caractérisée en ce que**
le racleur (6) est réalisé pour évacuer les matières solides raclées du tamis (4) dans la zone de fond de la goulotte de réservoir ou analogue, et un dispositif transporteur est prévu pour transférer vers l'extérieur de l'écoulement les matières raclées par le racleur (6) vers la zone de fond, ou il est prévu dans la zone de fond un dispositif réducteur (29) (hachoir, broyeur ou analogue) pour la poursuite du transport des matières solides correspondantes, réduites, traversant le tamis (4) avec la veine de liquide vers une station d'épuration ou installation analogue, ou encore à la fois un dispositif réducteur (29) et un dispositif transporteur, sont prévus pour évacuer les matières solides non suffisamment réduites à l'extérieur de l'écoulement.

4. Installation de séparation selon la revendication 3,
**caractérisée en ce que**
la zone de fond est réalisée par une chambre collectrice (9) pour recueillir les matières solides raclées par le racleur (6) du tamis (4), cette chambre collectrice étant formée au-dessus de la sole (3) de la goulotte (2) ou du fond du réservoir ou analogue ou au moins en partie par une cavité (10) en dessous de la sole (3) ou du fond, et
cette chambre collectrice (9) est reliée au dispositif de transport (13 ; 19 ; 20) en formant une source de dépression comme une pompe aspirante (13), dans le sens d'une mise sous vide de la chambre à dépression concernée ou analogue, ou une pompe à refoulement dans le sens de l'établissement d'une pression de la chambre à surpression ainsi sollicitée ou analogue, ou encore un dispositif de transfert mécanique tel qu'une vis transporteuse ou analogue.

5. Installation de séparation selon la revendication 3 ou 4,
**caractérisée en ce que**
le tamis (4) est incliné par rapport à la direction de l'écoulement, lorsqu'on le regarde à partir de sa zone de bord inférieur ou de la verticale.

6. Installation de séparation selon la revendication 5,
**caractérisée en ce que**
le tamis (5) comporte des tiges de tamis (5') situées dans un plan sensiblement vertical, parallèles, écartées selon l'effet de séparation à réaliser, et entre lesquelles sont formées les ouvertures du tamis comme fentes allant de haut en bas jusqu'au fond (3) de la goulotte (2), réservoir ou analogue, fentes dans lesquelles pénètrent les dents en forme de crochets (7) du racleur (6) au cours de son mouvement de raclage, de haut en bas, alors que le mouvement opposé des dents de raclage (7) se fait à l'extérieur de l'attaque du tamis (5),
les dents en forme de crochets (7) étant en saillie dans la direction de l'écoulement ou dans la direction opposée pour pénétrer dans les orifices du tamis.

7. Dispositif de séparation selon l'une des revendications 3 à 5,
**caractérisé en ce que**
le tamis est en forme de tôle percée (23) le long de laquelle le racleur (24) est guidé en raclage ou en tournant, de haut en bas, alors que le mouvement opposé se fait sans contact avec le tamis.

8. Dispositif de séparation selon l'une des revendications 3 à 5,
**caractérisé en ce que**
l'appareil de raclage est un racleur à chaîne sans fin (25) ou un racleur à étages filtrants (26).

9. Dispositif de séparation selon l'une des revendications 3 ou 4,
**caractérisé en ce que**
l'appareil de raclage est réalisé sous la forme d'un ou plusieurs dispositifs de raclage à tamis hélicoïdal ou à tamis en spirale (31), juxtaposés.

10. Dispositif de séparation selon l'une des revendications 3 à 5,
**caractérisé en ce que**
le racleur est formé par des buses d'éjection dirigées vers les matières solides recueillies par le tamis (5), les buses étant coulissantes dans le sens de la hauteur du tamis.

11. Dispositif de séparation selon l'une des revendications 3 à 10,
**caractérisé en ce que**
les ouvertures du tamis (5) s'élargissent à partir du fond vers le haut, en particulier dans le cas d'une réalisation avec des tiges de tamis (5', 5", 5"'), l'écartement étant tel qu'il augmente vers le haut, notamment de manière étagée.
